# EUROPEAN PATENT SPECIFICATION

(11) **EP 1 669 256 B1**
(45) Date of publication and mention of the grant of the patent: **25.05.2011**
(21) Application number: 05027024.8
(22) Date of filing: 09.12.2005
(51) Int. Cl.: B60R 21/205

(54) **Attachment structure for an automotive airbag unit**
Befestigungsanordnung für einen Airbag in einem Kraftfahrzeug
Dispositif de montage pour un sac de sécurité gonflable dans un véhicule automobile

(30) Priority: 10.12.2004 JP 2004358679
(43) Date of publication of application: 14.06.2006
(73) Proprietor: AUTOLIV DEVELOPMENT AB, 447 83 Vargarda (SE)
(72) Inventor: Sakamoto, Toshihiro c/o Autoliv Japan Ltd., Kasumigaura-shi Ibaraki 3158520 (JP); Hatakeyama, Noaki c/o Autoliv Japan Ltd., Kasumigaura-shi Ibaraki 3158520 (JP)
(74) Representative: Oser, Andreas

(56) References cited:
- EP-A- 0 671 297
- US-A- 5 425 549
- US-A- 5 489 116
- US-A- 5 803 487
- US-A1- 2002 038 946

## Description

### [Technical Field]

The present invention is a structure which improves the means through which an automotive airbag unit is supported by a vehicle's steering support member and instrument panel, reduces the size and weight of the airbag unit and peripheral structures, and improves the productivity through which the automotive airbag unit is assembled.

### [Background of the Invention]

Airbag unit support structures are described by Reference Documents 1 and 2. Reference Document 1 describes a case for an airbag supported by a reinforcing member, such as a steering support member or like part, through 1st and 2nd brackets. A support member with a hooked part is welded to the case, and the support member is inserted to a hole of a support part on the instrument panel. The case for the airbag is thus attached to the vehicle through this structure.

Reference Document 2 describes an airbag supported by a steering support member through an airbag support bracket. The airbag is also supported on the instrument panel through an airbag door. In addition, an airbag door boss is supported by a box part installed within the instrument panel. The airbag is thus attached to the vehicle through this structure.
[Reference Document 1 ] Japanese unexamined patent publication No.10-76900
[Reference Document 2] Japanese unexamined patent publication.No.11-91479

### [Disclosure of the Invention]

### [Shortcomings Resolved by the Invention]

The above-noted prior arts describe airbag units supported both by a steering support member and instrument panel wherein two separate support parts are provided in the form of a steering member support part and an instrument panel support part. The following factors become apparent as a result of the need to separately attach these two support parts for installation of the airbag unit to the vehicle. The structure requires that two separate support parts must be attached to the airbag unit, thus making the airbag heavy and necessitating a large number of spot welds, a factor which complicates the manufacturing process and adversely affects assembly productivity. Moreover, more space must be provided with the airbag unit for the attachment of the two support parts, thus making the airbag unit larger and heavier. This type of structure, which requires supporting a large and heavy airbag unit by two support parts within a narrow space, further complicates the design of peripheral structures.

Another prior art airbag unit support structure is shown in US 5 425 549 A.

US 5 489 116 A describes a mounting assembly, which is provided for mounting an airbag module in the instrument panel of an automotive vehicle. This includes a box-like tray member secured to the instrument panel and to the vehicle body that receives an airbag module in snap-fit relationship upon insertion of the airbag module through an aperture in the instrument panel.

US 2002/0038946 A describes an airbag module, which is capable of passing through a glove box opening portion of an instrument panel. An opening portion of a module case faces the inner surface of an airbag lid and the lower portion of the module case is fixed detachably to a steering hanger beam via a lower portion tightening means. The front of the upper portion of the module case is locked on and capable of engaging and removing with respect to the wall part of the instrument panel by a front locking means, and the rear of the upper portion of the module case is fixed detachably to the top wall part via a rear tightening means. The module case comprises a lower portion tightening means and a rear tightening means, both protruding from a base plate, to be supported by by the steering hanger beam and the instrument panel, respectively tively.

The inventor, having thoroughly studied the aforesaid shortcomings associated with the prior art technology, proposes an improved airbag unit support structure wherein the airbag unit is supported by a steering support member and instrument panel. This improved automotive airbag unit attachment structure allows for airbag unit itself and peripheral structures to be made smaller and lighter, and also increases assembly productivity.

### [Means of Overcoming Shortcomings in the Prior Art]

The present invention provides an automotive airbag unit support structure as defined in claim 1. Preferred embodiments are set forth in the subclaims.

The automotive airbag unit attachment structure specified by the invention comprises a 1st support member which supports an airbag unit on a steering member support, and a 2nd support member which supports the airbag unit on an instrument panel, wherein the 1st and 2nd support members are integrated into a single fastening part, the fastening part is attached to the airbag unit, the airbag unit is supported by the steering support member through the 1st support member and by the instrument panel through the 2nd support member, and the steering support member and instrument panel are connected by the fastening part.

The 1st support member is disposed behind, in a direction toward the rear of the vehicle, a region formed as a planar projection defined by the perimeter of the airbag unit, and functions to transfer loads input from the airbag unit to the steering support member.

It is preferable that the fastening part is formed in the width direction of the airbag unit, and that the 2nd support member is formed as a plurality of support members along the width direction of the fastening part.

It is preferable that the fastening part is formed in the width direction along the airbag unit, and that the 1st support member is formed as a plurality of support members along the width direction of the fastening part.

The 2nd support member includes a hook-shaped part to be inserted and locked into a hole formed in the instrument panel.

### [Effect of the Invention]

The automotive airbag unit attachment structure invention improves the structure that the airbag unit is supported by the steering support member and instrument panel, whereby reducing the size and weight of the airbag unit and peripheral structures and improving the productivity of the airbag unit assembly process.

### [Embodiments of the Invention]

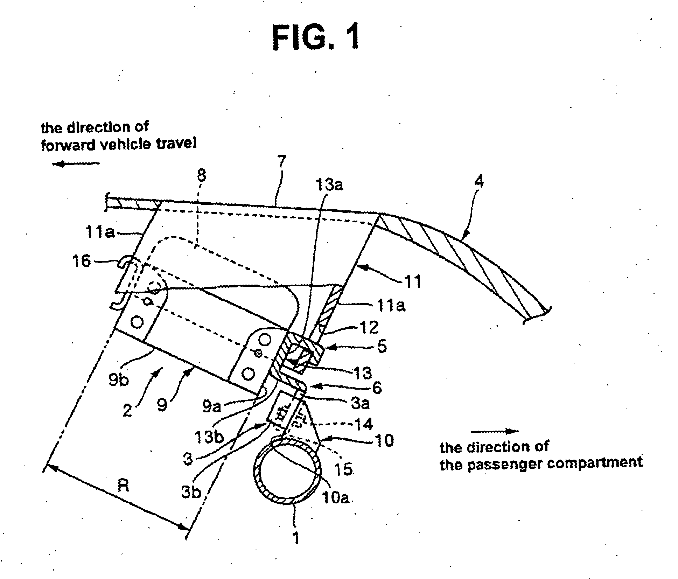

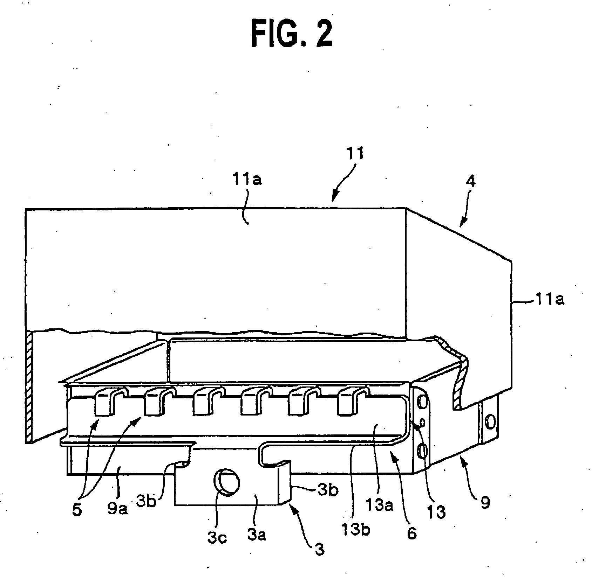

The following is a detailed description, with reference to the attached drawings, of a preferred embodiment of the automotive airbag unit attachment structure. The automotive airbag unit attachment structure described by this embodiment includes, as illustrated in Fig. 1 and Fig. 2, a 1st support member 3 which supports an airbag unit 2 on a steering support member 1, and a 2nd support member 5 which supports the airbag unit 2 on an instrument panel 4. A fastening part 6 is provided as a single member which incorporates the 1st support member 3 and 2nd support member 5 as integral parts thereof. The fastening part 6, which is fixedly attached to the airbag unit 2, supports the airbag unit 2 on the steering support member 1 through the 1st support member 3, supports the airbag unit 2 on the instrument panel 4 through the 2nd support member 5, and also functions as a connecting member between the steering support member 1 and the instrument panel 4.

The airbag unit 2 is installed within the instrument panel 4 on the passenger side behind an openable airbag lid 7. The pipe-shaped steering support member 1 is installed within the instrument panel 4. As illustrated in the drawing, the right side where the instrument panel 4 drops down slightly toward the passenger compartment, and the left side is on the direction of forward vehicle travel. The airbag unit 2 is structured primarily of the airbag 8 which may be inflated and expanded from a collapsed folded condition by a gas introduced from an inflator, and a metallic airbag case 9 that contains airbag 8. The case 9 is a rectangular box-like structure having an open top, four flat external side plates 9a, and a floor plate 9b which seals the bottom thereof. The airbag unit 2 is inclined so as to place the side of the case 9 on the forward side of the vehicle higher than the side facing the passenger compartment, thus directing the inflation direction of the airbag 8 in a direction toward the interior of the passenger compartment.

The steering support member 1 is disposed toward the rear of the vehicle behind the region R which is a planar projection of the perimeter of the airbag unit 2 defined by the case 9. To be more specific, planar projection region R would be the area in shadow were airbag unit 2, that is to say the case 9, to be illuminated from directly above. As a result of the inclination of the airbag unit 2, planar projection region R occupies an area that inclines over a distance from the interior of the passenger compartment toward the front of the vehicle. The steering support member 1 is located so as not to enter region R. The steering support member 1 has a curved surface to which a mounting bracket 10 is attached. The mounting bracket 10 includes a planar mounting face 10a through which a bolt hole (not shown in the drawings) is formed.

A hollow angular space formed within instrument panel 4 extends from the perimeter of the airbag lid 7, said space being defined by a mounting frame 11 in which airbag unit 2 resides. The mounting frame 11 is disposed at an inclination corresponding to that of the airbag unit 2. Attachment holes 12 are formed through both the forward and rearward facing sides of wall 11a of mounting frame 11. The inclination of attachment holes 12 between the forward side and rearward side matches that of the airbag unit 2, thereby establishing attachment holes 12 of the forward-facing side at a higher position than those of the rearward-facing side.

Metallic Fastening part 6 includes a base plate 13 which extends along the width of the airbag 2, the 1st support member 3 which protrudes from the lower edge of base plate 13 as an integral part thereof, and the 2nd support member 5 which protrudes from the upper edge of base plate 13 as an integral part thereof. Therefore, fastening part 6 is a single part which includes the 1 st support member 3 and the 2nd support member 5 connected through the base plate 13.

The base plate 13 includes a vertical portion 13a and horizontal portion 13b, the latter being bend-formed in the horizontal direction as a part slightly extending from the lower edge of the vertical portion 13a. Portions 13a and 13b together form an approximate L-shape in cross section. The 1st support member 3 protrudes at the center of the width direction of the horizontal portion 13b located in the lower edge of the base plate 13. The 1st support member 3 includes an attachment face 3a which is a continuation of the downwardly bend-formed part of the horizontal portion 13b, and which installs against the mounting face l0a of the mounting bracket 10 of steering support member 1. The 1st support member 3 also includes stiffening flanges 3b formed by the right and left ends of the attachment face 3a being bent inward toward.horizontal portion 13b as means of preventing the deformation of the attachment face 3a. A thru-hole 3c is formed through attachment face 3a, thus allowing the fastening part 6 to be attached to the mounting bracket 10 of the steering member 1 by passing a bolt 14 through a bolt hole in the mounting bracket 10 and the thru-hole 3c, and tightening a nut 15 to the bolt 14.

The 2nd support member 5 is formed as a protruding hook-shaped part bend-formed in a direction toward the 1st support member 3 from the upper edge of vertical portion 13a in order that it may be inserted and locked into the attachment hole 12 formed in the rearward facing wall 11a of the mounting frame 11 of the instrument panel 4. A plurality of 2nd support members 5 are formed at required intervals along the width direction of fastening part 6. Fastening part 6 is fixedly attached to the side plate 9a on the vehicle rear side of the case 9 of the air bag unit 2 by spot welding, threaded fastener, or other attachment means. Hook member 16 is secured to the side plate 9a on the vehicle front side of the case 9, and inserted and locked into a hole formed in the forward facing wall 11a of the mounting framell as means of supporting the case 9 on the mounting frame 11.

Moreover, 1st support member 3, as means of supporting the input load applied to steering support member 1 from the activation of airbag unit 2, is disposed at a point behind the planar projection region R of the airbag 2 toward the rear of the vehicle. In other words, 1st support member 3 is disposed, outside of the region R, between the side plate 9a on the vehicle rear side and the steering support member 1 without entering the planar projection region R. When the airbag 8 activates, expands, and flies outward from the airbag lid 7, the gas pressure within the airbag 8 is applied to the case 9 of the airbag unit 2 to generate the moment around the rearward support point, more specifically, in the areas immediately surrounding the 2nd support member 5, and tends to pressurize case 9 downward toward the passenger compartment. This rotational force to case 9 is transferred from the airbag unit 2 to the steering support member 1. It is not desirable to locate the 1st support member 3 within the planar projection region R as this pressure would tend to bend 1st support member 3.

In this embodiment, the 1st support member 3 is disposed external to the planar projection region R between the plate 9a on the vehicle rear side of the case 9 and the steering support member 1, and is thus able to adequately withstand airbag activation pressure, which is applied in the form of axial force to the mounting bracket, and transfer the force to steering support member 1.

The following will describe the operation of the automotive airbag unit attachment structure as specified in this embodiment. To install the airbag unit 2 within the instrument panel 4, fastening part 6 and hook member 16 must be previously attached to the case 9 of the airbag unit 2. Subsequently, 2nd support members 5 and hook member 16 are placed into and hung onto the holes 12 formed in the mounting frame 11 of the instrument panel 4, thus resulting in the case 9 being supported by the instrument panel 4. The structure, thus disposed, places attachment face 3a of the 1 st support member 3 against mounting face 10a of mounting bracket 10 on the steering support member 1. Mounting bracket 10 and 1 st support member 3 are then bolted together, thus resulting in steering support member 1 also supporting the case 9.

This automotive airbag unit attachment structure specifies a single fastening part 6 incorporating the 1st support member 3 which holds the air bag unit 2 to the steering support member 1, and also incorporating the 2nd support member 5 which holds the airbag unit 2 to the instrument panel 4. Therefore, the airbag support structure is lighter in weight than one which requires providing separate support members with the case 9. Moreover, the airbag attachment structure is assembled through the attachment of only a single fastening part 6, thus reducing the number of locations requiring spot welding and the number of requiring assembly processes to the case 9, and thus improving assembly productivity. Furthermore, only the base plate 13 of the fastening part 6 need be attached to the case 9, thus realizing a structure which reduces the necessary mounting space on the airbag unit 2 and also reducing both the size and weight of the airbag unit 2 itself. This structure is able to reduce the size and weight of the airbag unit 2, and may be assembled only through the attachment of the single fastening part 6, whereby simplifying peripheral structures to allow the airbag unit 2 to be easily installed into a confined space.

Moreover, the fastening part 6 directly connects the steering support member 1 and the instrument panel 4, thus forming a structure wherein the instrument panel 4 is supported by the steering support member 1, thus preventing vibrations generated by the chassis and other sources from vibrating the instrument panel 4.

The rotational force generated by the activation of the airbag 8 and pressurizing the case 9 of the airbag unit 2 downward toward the passenger compartment can be transferred to the steering support member 1 as the axial force through the 1st support member 3 being disposed toward the rear of the vehicle behind the planar projection region R, whereby the airbag unit 2 is adequately supported and can properly exhibit its impact absorption effects.

The case 9 of the airbag unit 2 is strongly supported to the instrument panel 4 due to the plurality of 2nd support members 5 disposed along the width direction of the fastening part 6. The case 9 is supported by the instrument panel 4 in an easy handling through a simple structure wherein 2nd support member 5, which is formed as hook-shaped projecting part, is inserted and locked into the attachment hole 12 formed in the mounting frame 11 of the instrument panel 4.

Although the above-described embodiment specifies that 2nd support member 5 is formed as a plurality of support members, the 1st support member 3 may also be formed in plurality along the width direction of the fastening part 6. In this case, a number of mounting brackets 10 equaling the number of 1 st support members 3 would be attached to the steering support member 1. The mounting bracket 10 may also be formed as a one-piece member incorporating a plurality of mounting faces 10a which connect to a plurality of 1st support members 3.

### [Brief Description of the Drawings]

Fig. 1 is a side view cross section of a preferred embodiment of the automotive airbag unit attachment structure.
Fig. 2 is an enlarged perspective illustration of one part of the automotive airbag unit attachment structure.

### [Explanation of the numerals]

1: steering support member
2: airbag unit
3: 1 st support member
4: instrument panel
5: 2nd support member
6: fastening part
R: planar projection region of a perimeter of the airbag unit

## Claims

1. An automotive airbag unit attachment structure comprising a 1^{st} support member (3) which supports an airbag unit (2) on a steering support member (1), and a 2^{nd} support member (5) which supports said airbag unit (2) on an instrument panel (4), wherein
said 1^{st} and 2^{nd} support members (3, 5) are integrated into a single fastening part (6), said fastening part (6) having a base plate (13) from which the 1^{st} support member (3) and the 2^{nd} support member (5) respectively protrude from the lower edge and the upper edge thereof,
**characterized in that**: said airbag unit (2) comprises an airbag (8) and an airbag case (9), and
said airbag case (9) is supported by said steering support member (1) through said 1^{st} support member (3) and by said instrument panel (4) through said 2^{nd} support member (5), and said fastening part (6) is fixedly attached to said airbag case (9) by the base plate (13) of the fastening part (6),
wherein said 2^{nd} support member (5) is formed as a hook-shaped part to be inserted and locked into a hole (12) formed in said instrument panel (4).

2. An automotive airbag unit attachment structure according to claim 1 wherein said 1^{st} support member (3) is disposed behind, in a direction to the rear of the vehicle, a region (R) formed as a planar projection defined by the perimeter of said airbag unit (2), and functions to transfer loads input from said airbag unit (2) to said steering support member (1).

3. An automotive airbag unit attachment structure according to claim 1 or 2 wherein said fastening part (6) is formed along the width direction of said airbag unit (2), and said 2^{nd} support member (5) is formed as a plurality of support members along the width direction of said fastening part (6).

4. An automotive airbag unit attachment structure according to any of claims 1 through 3 wherein said fastening part (6) is formed along the width direction of said airbag unit (2), and said 1^{st} support member (3) is formed as a plurality of support members along the width direction of said fastening part (6).

## Patentansprüche

1. Fahrzeugairbageinheit-Anbringstruktur, die ein erstes Tragebauteil (3) aufweist, das eine Airbageinheit (2) auf einem Lenkungsträgerbauteil (1) trägt, und ein zweites Tragebauteil (5), das die Airbageinheit (2) auf einem Armaturenbrett (4) trägt, wobei
das erste und das zweite Tragebauteil (3, 5) in ein einzelnes Befestigungsteil (6) integriert ist, wobei das Befestigungsteil (6) eine Basisplatte (13) hat, von der das erste Tragebauteil (3) und das zweite Tragebauteil (5) von deren unteren Kante bzw. deren oberen Kante hervorstehen,
**dadurch gekennzeichnet, dass** die Airbageinheit (2) einen Airbag (8) und ein Airbaggehäuse (9) aufweist, und
das Airbaggehäuse (9) durch das erste Tragebauteil (3) von dem Lenkungsträgerbauteil (1) und durch das zweite Tragebauteil (5) von dem Armaturenbrett (4) getragen wird und das Befestigungsteil (6) über die Basisplatte (13) des Befestigungsteils (6) fest an dem Airbaggehäuse (9) angebracht ist,
wobei das zweite Tragebauteil (5) als ein hakenförmiges Teil ausgebildet ist, dass in ein Loch (12), welches in dem Armaturenbrett (4) ausgebildet ist, eingebracht und darin arretiert ist.

2. Fahrzeugairbageinheit-Anbringstruktur gemäß Anspruch 1, wobei das erste Tragebauteil (3) in einer Richtung zu der Hinterseite des Fahrzeugs hinter einem Bereich (R) angeordnet ist, welcher als eine flache Projektion, die von dem Umriss der Airbageinheit (2) definiert wird, ausgebildet ist und so funktioniert, dass er Belastungen, die von der Airbageinheit (2) eingebracht werden, auf das Lenkungsträgerbauteil (1) überträgt.

3. Fahrzeugairbageinheit-Anbringstruktur gemäß Anspruch 1 oder 2, wobei das Befestigungsbauteil (6) entlang der Breitenrichtung der Airbageinheit (2) ausgebildet ist und das zweite Tragebauteil (5) als eine Vielzahl von Tragebauteilen entlang der Breitenrichtung des Befestigungsteils (6) ausgebildet ist.

4. Fahrzeugairbageinheit-Anbringstruktur gemäß einem der Ansprüche 1 bis 3, wobei das Befestigungsteil (6) entlang der Breitenrichtung der Airbageinheit (2) ausgebildet ist und das erste Tragebauteil (3) als eine Vielzahl von Tragebauteilen entlang der Breitenrichtung des Befestigungsteils (6) ausgebildet ist.

## Revendications

1. Structure de fixation d'unité de coussin de sécurité gonflable pour automobile, comprenant un premier élément de support (3) qui supporte une unité de coussin de sécurité gonflable (2) sur un élément de support de direction (1) et un deuxième élément de support (5) qui supporte ladite unité de coussin de sécurité gonflable (2) sur un tableau de bord (4), dans laquelle :
lesdits premier et deuxième éléments de support (3, 5) sont intégrés dans une seule partie de fixation (6), ladite partie de fixation (6) ayant une plaque de base (13) à partir de laquelle le premier élément de support (3) et le deuxième élément de support (5) font respectivement saillie de son bord inférieur et de son bord supérieur,
**caractérisée en ce que** : ladite unité de coussin de sécurité gonflable (2) comprend un coussin de sécurité gonflable (8) et un boîtier de coussin de sécurité gonflable (9), et
ledit boîtier de coussin de sécurité gonflable (9) est supporté par ledit élément de support de direction (1) par le biais du premier élément de support (3) et par ledit tableau de bord (4) par le biais dudit deuxième élément de support (5), et ladite partie de fixation (6) est fixée de manière fixe audit boîtier de coussin de sécurité gonflable (9) par la plaque de base (13) de la partie de fixation (6),
dans laquelle ledit deuxième élément de support (5) est formé comme une partie en forme de crochet à insérer et à bloquer dans un trou (12) formé dans ledit tableau de bord (4).

2. Structure de fixation d'unité de coussin de sécurité gonflable pour automobile selon la revendication 1, dans laquelle ledit premier élément de support (3) est disposé derrière, dans une direction vers l'arrière du véhicule, une région (R) formée comme une saillie plane définie par le périmètre de ladite unité de coussin de sécurité gonflable (2) et fonctionne pour transférer les charges introduites de ladite unité de coussin de sécurité gonflable (2) audit élément de support de direction (1).

3. Structure de fixation d'unité de coussin de sécurité gonflable pour automobile selon la revendication 1 ou 2, dans laquelle ladite partie de fixation (6) est formée le long du sens de la largeur de ladite unité de coussin de sécurité gonflable (2) et ledit deuxième élément de support (5) est formé comme une pluralité d'éléments de support le long du sens de la largeur de ladite partie de fixation (6).

4. Structure de fixation d'unité de coussin de sécurité gonflable pour automobile selon l'une quelconque des revendications 1 à 3, dans laquelle ladite partie de fixation (6) est formée le long du sens de la largeur de ladite unité de coussin de sécurité gonflable (2) et ledit premier élément de support (3) est formé comme une pluralité d'éléments de support le long du sens de la largeur de ladite partie de fixation (6).
